# EUROPEAN PATENT APPLICATION

(11) **EP 4 541 490 A1**
(43) Date of publication of application: **23.04.2025**
(21) Application number: 23383064.5
(22) Date of filing: 18.10.2023
(51) Int. Cl.: B23B 29/02

(54) **DAMPER FOR VIBRATION ATTENUATION IN A CUTTING TOOL OF A MACHINE TOOL**

(71) Applicant: Ideko, S.Coop., 20870 Elgoibar Guipuzcoa (ES); Universidad del Pais Vasco, 48940 Leioa, Bizkaia (ES)
(72) Inventor: ASTARLOA BADIOLA, ASIER, 20870 ELGOIBAR (GIPUZKOA) (ES); MANCISIDOR AIZPURUA, IKER, 20870 ELGOIBAR (GIPUZKOA) (ES); PEÑA BARRIO, JOSU, 20870 ELGOIBAR (GIPUZKOA) (ES); BEUDAERT, XAVIER MATHIEU, 20870 ELGOIBAR (GIPUZKOA) (ES); GONZALEZ BARRIO, HAIZEA, 48940 LEIOA (BIZKAIA) (ES)
(74) Representative: Plasseraud IP

(57) **Abstract**

The present invention relates to an active damper (1) for vibration attenuation in a boring bar (100) comprising an actuator (101) with electromagnets (4) attached to a body (2) thereof, and an inertial mass (3) in a cavity (12) of the actuator (101) movable in directions perpendicular to the longitudinal direction of the actuator (101); comprising an acceleration sensor (5) in the actuator (101) and control means (9) of currents of the electromagnets (4) depending on the measurements of the acceleration sensor (5).

## Description

### Technical field

The present invention belongs to the technical field of dampers for vibration attenuation in a cutting tool of a machine tool.

### State of the art

Self-excited vibrations in machining processes constitute a phenomenon that limits the productivity of said processes and reduces the surface quality of machined parts below that which is required. In addition, self-excited vibrations accelerate the wear of machine tool components, potentially causing breakage of the cutting tool of the machine tool. These vibrations occur in a wide variety of machining operations and the elimination or reduction thereof has become one of the main concerns in order to increase production efficiency. Therefore, both the elimination and the prediction of this phenomenon is and will continue to be a problem to be addressed.

Self-excited vibrations depend on different factors such as the dynamic rigidity of the machine tool, particularly of the cutting tool, parameters of the cutting process, the part to be machined and the properties of the cutting tool. Therefore, vibration reduction is a complex problem that can potentially be solved with different approaches.

In turning and boring operations, the appearance of machining vibrations is one of the main productivity problems. In these operations, the cutting tool is the critical part of the machine tool because the static and dynamic flexibility of the tool is high compared to the rest of the machine tool, due to its slenderness.

In internal turning operations, the geometry and dimensions of the cutting tool and boring bar depend on the part to be machined. The slenderness of the cutting tool and the boring bar depend on the ratio between the length and diameter thereof.

The main reason for which self-excited vibrations are generated during the cutting process is due to the influence of the bending mode of the slender boring bar into which the boring head is attached. Solutions are already known which reduce self-excited vibrations by placing a passive damper inside the boring bar of the machine tool. Active dampers are another solution, these being the ones that act dynamically during machining, damping vibrations depending on the amplitude and frequency thereof.

Passive dampers, unlike active dampers, do not require external electrical power supply for damping. Passive dampers are already known that clearly improve the stability of the cutting process, although same show two main limitations:
- The tuning of the passive damper is valid exclusively for specific dynamic characteristics of the boring bar, so that it represents a solution that is not very flexible in the face of variations in the dynamic characteristics. Therefore, passive dampers are designed specifically for each tool as same must be tuned close to the critical bending mode frequency of the boring bar. Therefore, the effectiveness of passive dampers is reduced if the natural frequency changes due to the use of different cantilevers of the boring bar and variations in the rigidity of the clamping of the cutting tool.
- The ability to damp vibration is proportional to the value of the moving mass of the passive damper. Therefore, to increase the efficiency thereof, the weight of the moving mass of the passive damper must be increased, which entails an increase in the volume of the cutting tool and the geometric limitation involved in the machining of certain parts.

The use of active dampers allows us to solve some of the problems posed by passive dampers. The known active dampers act by applying a damping force depending on the amplitude and frequency of the vibrations generated during machining. It is common for this force to preferably follow the physical principle of Lorentz's law by generating an electromagnetic force to suppress the vibration. More specifically, a current within a magnetic field generates an electromagnetic force the magnitude of which is the product of the current and the magnetic field, and the direction is defined by the vector product of both in the remaining perpendicular direction of the coordinate axis. The current defines the dynamic character of the force, so that based on a control law, the optimal magnitude, frequency and phase of the current introduced to remove unwanted vibrations is defined.

This type of active dampers that follow the principle of Lorentz's law are characterised by the linearity and controllability thereof. However, in this type of active dampers that follow the principle of Lorentz's law, the forces to be applied are limited, which makes it difficult to obtain a good force density, and therefore, good effectiveness. Furthermore, this drawback is accentuated when actuation in a plane is required, since the configuration of magnets that this actuation requires comprises a considerable actuator volume.

### Object of the invention

The present invention aims to solve problems that are present in state of the art solutions such as those mentioned above, such as the ease of adjustment of the boring bar to variable vibratory and dynamic conditions. To this end, the present invention relates to an active damper that uses readings related to vibration to then exert a controlled force dependent on the vibration-related readings. In this way, the damper allows external energy correlated with the cutting forces to be introduced into the boring bar.

A first aspect of the present invention relates to a damper for vibration attenuation in a boring bar, the damper comprising:
- an actuator comprising a first end, a second end and a cavity, the cavity being between the first end and the second end; at least one of the first end and the second end being attachable to a boring bar with a fixed body that defines a longitudinal direction from the first end to the second end, the actuator comprising:
   - electromagnets that are fixed with respect to the body (2) of the actuator, the electromagnets being configured to generate a magnetic field in the cavity, and distributed in the body (2) according to different actuation directions perpendicular to the longitudinal direction;
   - an inertial mass in the cavity, the inertial mass being movable with respect to the body in directions perpendicular to the longitudinal direction; the electromagnets being around the inertial mass;
   - an acceleration sensor configured to measure accelerations of the actuator, attached to the fixed body of the actuator and the accelerations having directions perpendicular to the longitudinal direction; and
- and control means for adjusting currents of the electromagnets communicatively connected to the acceleration sensor of the actuator, and the control means being configured to adjust currents of the electromagnets based on measurements of the accelerations of the actuator, the accelerations having directions perpendicular to the longitudinal direction.

It is contemplated that the inertial mass is made of ferromagnetic material for its interaction with the electromagnets. With this solution, the active damper as per the invention acts on the inertial mass, generating a magnetic force following Maxwell's magnetic principles. A current intensity in the fixed electromagnets generates a magnetic flux, causing attraction forces on the inertial mass of the actuator. The magnetic forces generated are related to the current passing through a winding that winds the ferromagnetic core of the electromagnet. Thus, the active damper as per the invention is based on introducing a current of optimal amplitude, phase, and frequency that generates the magnetic force required to attenuate or remove unwanted vibration.

Therefore, the active damper allows the vibrations of the boring bar to be known, allowing the currents to be adjusted based on the measurements of the actuator accelerations, achieving dynamic control of the vibration that allows attenuating, and even suppressing, self-excited vibrations in a cutting tool during the cutting process, in order to increase the dynamic rigidity to obtain a stable cutting process. The active damper uses a variable reluctance actuator. The reluctance within the magnetic circuit depends on the relative position between the inertial mass and the electromagnets. Due to the fact that the inertial mass is part of a magnetic circuit of the damper and is movable, the inertial mass moves in response to the magnetic force, in particular, it is movable in directions perpendicular to the longitudinal direction.

The reluctance active damper of the invention generates attraction forces, according to an alternative solution to the known active dampers that generate the forces through the principle of Lorentz's law, being possible to generate the damping forces in several radial directions with a simpler configuration than active Lorentz dampers, further achieving better vibration control and attenuation.

The active damper of the present invention facilitates damping, saving costs and time. Among other advantages, the active damper as per the invention allows:
- increasing the productivity of machining operations;
- increasing the quality of the cut part, minimising surface defects;
- minimising the wear of the components of a machine tool and, in particular, the cutting tool, increasing the useful life thereof;

The fact of introducing the electromagnets into the fixed structure of the active damper, i.e., into the body of the damper, makes it possible to minimise the probabilities of electrical failure, since the electrical circuit of the electromagnets does not have to move together with the movable mass, thus reducing the risk of contact of the electromagnets with other damper components. Moreover, it allows obtaining a higher mass in the inertial mass and thus increasing the associated inertial forces.

The active damper, due to its generation of forces through reluctance, has a non-linear dynamic the force of which is related to the air gap (hollow between the wound ferromagnetic element and the inertial mass), and to the non-linearities of the magnetisation curve. This nonlinearity can make effective control difficult to achieve in practice.

To remove these non-linearities of the magnetisation curve, the use of BIAS is provided in the active damper as per the invention. The operation of the BIAS is based on the introduction of a direct current to move the system to a linear area of the magnetisation curve without reaching the saturation point. In this way, it is possible to linearise the magnetic field in the face of current variations so that this non-linearity in the generated force is avoided. Another way to achieve continuous magnetisation is by using permanent magnets, so that the inertial mass can contain permanent magnets that increase the magnetic forces.

Electromagnets may comprise ferromagnetic cores and coils wound on the ferromagnetic cores. Logically, the ferromagnetic material of the ferromagnetic cores does not have to be soft iron, it can be another ferromagnetic material that allows the generation of a sufficiently high magnetic field in the cavity.

In some embodiments, the first end and/or the second end may be removably attachable to the boring bar between the end of the boring bar and the boring head comprising the cutting tool or tip. The active damper actuator is in the form of a removable module for replacement or maintenance thereof, the active damper as per the invention providing a modular nature. In other embodiments, the first end and/or the second end of the actuator may be non-removably attachable to the boring bar forming an integral part of the bar.

In some embodiments, the cavity is cylinder-shaped; the directions perpendicular to the longitudinal direction being radial directions of the cavity. In other words, the cylinder-shaped cavity defines an axis of revolution, the axis of revolution having a direction parallel to the longitudinal direction.

In some embodiments, the electromagnets are in the actuator cavity. These embodiments make it possible to increase the proximity between the inertial mass and the electromagnets, i.e., to reduce the air gap between the inertial mass and the electromagnets.

In some embodiments, the electromagnets are in symmetrical locations with respect to an axis of revolution of the cavity, covering different radial directions of actuation. The axis of revolution of the cavity is an imaginary axis. The symmetrical locations of the electromagnets facilitate symmetrical control of the magnetic forces between the inertial mass and the electromagnets.

In some embodiments, the inertial mass is suspended in the cavity. These embodiments make it possible to facilitate the movement of the inertial mass in any direction perpendicular to the longitudinal direction.

In some embodiments, the inertial mass is coupled to the body of the damper module by means of an elastic coupling, for example, by means of a spring. Although the elastic coupling is not required because the mere magnetic forces between the inertial mass and the electromagnets allow the position of the inertial mass to be controlled, and more specifically, a suspension of the inertial mass in the cavity, a coupling between electromagnets and inertial mass by means of an elastic coupling, for example, by means of a radial elastic coupling, makes it possible to avoid zero rigidity of the inertial mass, thus increasing the controllability thereof. This embodiment also ensures that the inertial mass and the electromagnets do not make physical contact when no current is introduced into the electromagnets, ensuring the durability of the solution.

In some embodiments, the acceleration sensor of the fixed body of the actuator comprises a biaxial accelerometer or two uniaxial accelerometers.

In some embodiments, the control means are configured to adjust the amplitude and/or frequency of the electromagnet currents based on measurements of the accelerations of the boring bar, the accelerations having directions perpendicular to the longitudinal direction. This adjustment based on acceleration measurements allows the magnitude and frequency of the magnetic force to be controlled.

In some embodiments, the damper comprises an inertial mass acceleration sensor, the inertial mass acceleration sensor being configured to measure inertial mass accelerations, said accelerations having directions perpendicular to the longitudinal direction. The inertial mass acceleration sensor communicatively connected to the adjustment means, said adjustment means being configured to adjust currents of the electromagnets based on measurements of the accelerations of the damper module and based on measurements of the accelerations of the inertial mass, the accelerations of the structure having directions perpendicular to the longitudinal direction and the accelerations of the inertial mass having directions perpendicular to the longitudinal direction. The inertial mass acceleration sensor improves the control of non-linearities due to the fact that same allows the electromagnet currents, and thus the magnetic force, to be adjusted to the position of the inertial mass.

This acceleration sensor in the inertial mass complements the BIAS system since, by means of a closed loop control, it allows the position of the inertial mass to be determined and thus controlling the air gap and the nonlinearity of the force associated with this parameter.

In some embodiments, the inertial mass acceleration sensor comprises a biaxial accelerometer or two uniaxial accelerometers for monitoring both directions of vibration.

In some embodiments, the first end of the module is reversibly attachable to a boring bar of a machine tool and at the second end the boring head comprising the tool or tip is removably attachable. As the module is part of the boring bar, the removable attachment makes it possible to obtain a boring bar comprising several assemblable longitudinal portions. These embodiments provide the following advantages:
- allow for a quick and easy replacement of the active damper;
- allow the length of the tool to be varied; and
- a flexible system that allows the same damper to be coupled to different boring bars, for example, to different fine boring bars.

To achieve said removable attachment, the damping module may comprise universal coupling means for coupling at the first end thereof to the boring bar, and universal coupling means for coupling the boring head at the second end thereof. These embodiments allow the damper to be used on different boring bars, such as with ISO 26623-1 polygonal type coupling system boring bars (Sandvik Coromant Capto^{®}).

According to a second aspect of the invention, the control means of the active damper of the invention are configured to automatically perform a dynamic calibration of each boring bar. For the correct operation of the active damper, optimal adjustment is required of the control parameters that minimise the dynamic flexibility of the boring bar to be damped. In this case, it is adjusted to the dynamics of each boring bar based on the length and diameter parameters thereof, and also by applying excitation through vibrations, the dynamic rigidity is obtained throughout the work space of the machine, thus being able to estimate its cutting capacity.

This dynamic calibration allows the following advantages:
- reducing the time to obtain an appropriate rigidity of a boring bar;
- facilitating the calibration process: unlike manual calibration, calibration of the damper of the first aspect of the present invention does not require such qualified operators;
- improving the quality of damper signals, for example signals generated by the accelerometers, due to the generation of relatively high forces;
- allow better knowledge of the properties of the dynamic linearity of the machine due to the possibility of generating forces of different magnitudes that can be reflected to the drives.

The application of excitation by means of vibrations also serves to calculate the modal analysis of the machine tool by the control means. In this way, the forms of vibration of the machine under dynamic loads produced during the cutting process are determined. This configuration allows for greater functionality and field of action than traditional dynamometric hammers and electrodynamic exciters; a reduction in modal analysis times; and a higher quality of modal analysis due to the repetitiveness of the excitation for each measurement point.

According to another aspect, the present invention relates to a boring bar, the boring bar comprising the active damper of the first aspect of the invention.

In some embodiments, the boring bar comprises the inertial mass as close as possible to the boring head than to the end of the module that is couplable to the boring bar. These embodiments make it possible to improve damping effectiveness: the closer to the cut-off point the active damper is located, the better the estimation of the dynamic behaviour derived from the measurements of the acceleration sensors and the better the effectiveness of the magnetic forces. In some embodiments, the boring bar tool holder comprises the damper.

The different aspects and embodiments of the invention defined above may be combined together, provided that they are mutually compatible.

Additional advantages and features of the invention will become apparent from the detailed description that follows and will be particularly indicated in the attached claims.

### Description of the figures

To help make the features of the invention more readily understandable, according to practical exemplary embodiments thereof, said description is accompanied by a set of drawings constituting an integral part thereof, wherein by way of illustration, the following has been represented:
Figure 1 schematically shows a portion of a boring bar of a machine tool according to a number of embodiments of the invention.
Figure 2 schematically shows a longitudinal cross section of a module of an active damper according to a number of embodiments of the invention.
Figure 3 schematically shows a longitudinal cross section of a module of an active damper according to a number of embodiments of the invention.
Figure 4 schematically shows an active damper according to a number of embodiments of the invention.
Figure 5 schematically shows a portion of a boring bar of a machine tool according to a number of embodiments of the invention.

### Detailed description of the invention

In light of this description and figures, the person skilled in the art may understand that the invention has been described according to some preferred embodiments thereof, but that multiple variations may be introduced in said preferred embodiments without departing from the object of the invention as claimed.

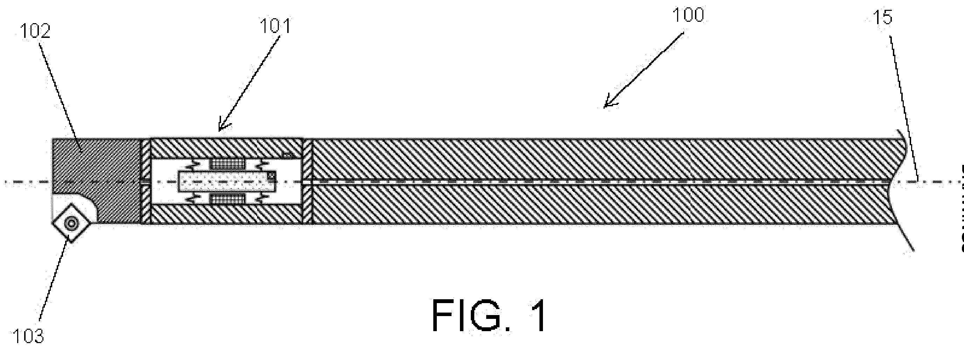

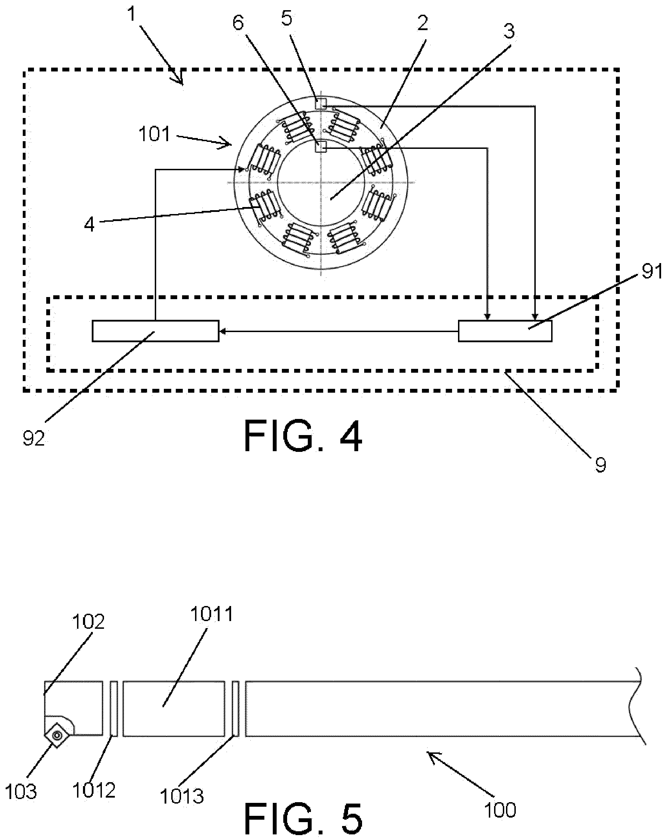

Figure 1 shows a boring bar (100). The boring bar (100) comprises an active damper (1) (shown in Figure 4) with an actuator (101), and a boring head (102). The boring head (102) comprises a cutting tool (103), specifically, a cutting tip. The active damper (1) allows the vibrations in the cutting tool (103) of the machine tool produced during fine boring to be actively reduced.

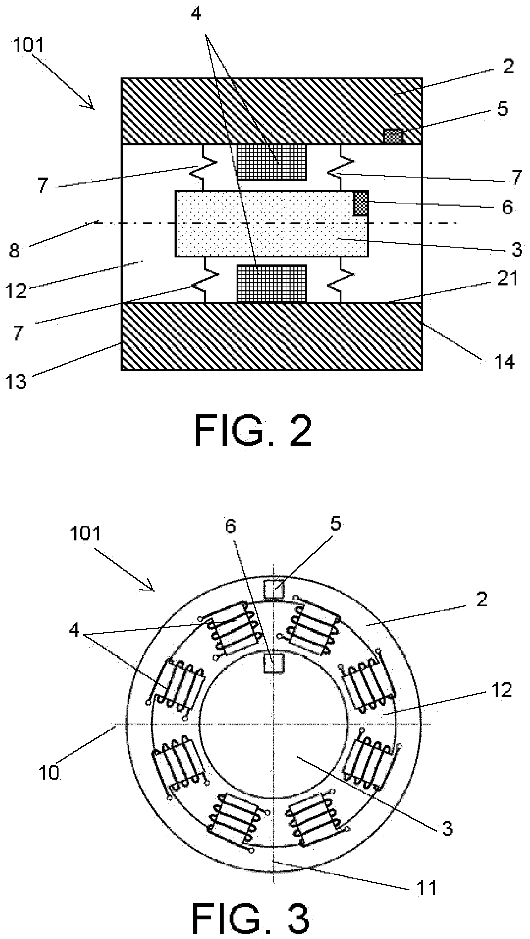

Figures 2 and 3 show the actuator (101) of the active damper (1). The actuator (101) of the active damper (1) comprises a body (2) with a first end (13), a second end (14) and a cavity (12) between the first end (13) and the second end (14). As illustrated in Figure 1, the actuator (101) is attached to the boring bar (100) by the second end (14) thereof and the boring head (102) is attached at the first end (13) thereof, forming a set in which the three elements (102, 101 and 100) are solidly joined and attached to one another.

As can be deduced from Figures 2 and 3, the cavity (12) has the shape of a cylinder, the cavity (12) defining an axial axis of the cavity (12) parallel to a longitudinal direction (8) that extends from the first end (13) towards the second end (14) of the actuator (101), a first radial axis of the cavity (12) parallel to a first radial direction (10) of the cavity (12) and a second radial axis of the cavity (12) parallel to a second radial direction (11) of the cavity (12). The body (2) of the actuator (101) comprises an internal surface (21) coinciding with the curved face of the cylinder-shaped cavity (12).

In one embodiment, such as that illustrated in Figure 1, the boring bar (100) defines a second longitudinal direction (15) from a cutting end (102) of the boring bar (100) towards the boring head (102). As can be deduced from Figures 1 and 2, the longitudinal direction (8) is parallel to the second longitudinal direction (15).

The actuator (101) of the active damper (1) comprises electromagnets (4) preferably fixed to the internal surface (21). The arrangement of the electromagnets (4) is symmetrical with respect to the axial axis of the cavity (12). Each of the electromagnets (4) comprises a ferromagnetic core and a coil wound on the ferromagnetic core. The electromagnets (4) allow the generation of a magnetic field in the cavity (12), the magnetic field being dependent on the currents of the coils of the electromagnets (4).

The actuator (101) of the active damper (1) comprises an inertial mass (3) suspended in the cavity (12). The inertial mass (3) is mechanically coupled to the body (2) by means of an elastic coupling, specifically, by means of springs (7), such that the inertial mass (3) is movable with respect to the body (2). The body (2) is a support structure for the inertial mass (3). The inertial mass (3) can oscillate in the cavity (12) in any radial direction of the cavity (12), such that the inertial mass (3) successively approaches and moves away from the internal surface (21).

As illustrated in Figures 2, 3 and 4, the actuator (101) comprises a structure (5) acceleration sensor. The structure acceleration sensor (5) is in the structure (2) and allows measuring accelerations of the structure (2) in radial directions of the cavity (12).

In this way, a vibration of the tool (103) causes the boring bar (100) and specifically the actuator (101) to vibrate with the same magnitude. These vibrations are detected by the acceleration sensor (5) of the actuator (101) so that based on the values obtained by the sensor (5) the current of the electromagnets (4) is adjusted to generate a force that moves the inertial mass (3) so that it adapts to the vibration frequency of the cutting tool (103). In this way, a convenient adjustment of the currents of the electromagnets (4) makes it possible to minimise the vibrations of the boring bar (100) by minimising the vibrations of the cutting tool (103).

Continuing with figures 2, 3 and 4, the inertial mass (3) comprises an acceleration sensor that allows accelerations of the inertial mass (3) in radial directions of the cavity (12) to be measured, which allows the position of the inertial mass (3) to be known and an improved adjustment to be performed in order to avoid non-linearities.

As illustrated in Figure 4, the damper (1) comprises adjustment means for adjusting currents (9) of the electromagnets (4). The adjustment means (9) are configured to adjust currents of the electromagnets (4) based on measurements of the accelerations of the cutting tool (103) in radial directions of the cavity (12). The adjustment means (9) comprise processing means (91) and an amplifier (92) of currents of the electromagnets (4). The processing means (91) are communicatively connected with the acceleration sensor (5) of the damper module (101) and with the acceleration sensor (6) of the inertial mass (3) to receive the measurements of the accelerations of the actuator (101) and of the inertial mass (3) respectively. The processing means (91) are configured to determine a current amplification signal using the acceleration measurements.

The processing means (91) are communicatively connected to the current amplifier (92) of the electromagnets (4) so that the amplifier (92) receives the current amplification signal. The amplifier (92) adjusts the currents supplied to the electromagnets (4) based on the current amplification signal. The acceleration measurements in radial directions of the cavity (12) allow determining parameters of the currents to be supplied to the electromagnets (4), such as frequencies of the currents and amplitudes of the currents, to minimise the vibrations of the cutting tool (103).

The electromagnets (4) are configured to adjust the magnetic force to which the inertial mass (3) is subjected in any direction of a radial plane of the cavity (12), i.e., in any radial direction of the cavity (12), also allowing a sufficiently high force to be obtained that is adjusted to the vibration of the boring bar (100).

The magnetic force between the inertial mass (3) and the electromagnets (4) supplied with a specific current does not vary linearly with the variation of the distance between the inertial mass (3) and the electromagnets (4). Specifically, the variation is greater if the distance between the inertial mass (3) and the electromagnets (4) is smaller, i.e., the variation increases as the air gap is reduced. These non-linearities can be reduced by adjusting the current of the electromagnets (4) to the relative position between the inertial mass (3) and the body (2). The relative position between the inertial mass (3) and the body (2) can be estimated using the acceleration measurements in radial directions taken by the acceleration sensor (5) of the actuator (101) and the acceleration sensor (6) of the inertial mass (3).

The magnetisation curves of the ferromagnetic cores of the electromagnets (4) present linear regions and non-linear regions. To prevent these non-linearities from causing non-linearities in the magnetic forces of the damper (1), the electromagnets (4) can be supplied with appropriate current amplitudes, i.e., with current amplitudes that cause a linear magnetisation of the ferromagnetic cores.

As illustrated in Figure 5, the actuator (101) is removably couplable to a machine tool, in other words, the actuator (101) is replaceable and couplable to different boring bars (100) in a modular manner. Specifically, Figure 5 shows an actuator (1011) attachable to the boring bar (100) by means of a first interface (1012) and a second mechanical interface (1013). The first mechanical interface (1012) allows the actuator (1011) to be attached to the cutting end (102).

According to the previous configuration of modularity couplable to different boring bars (100), according to one embodiment, the adjustment means (9) are configured to perform a dynamic calibration, automatically adjusting to the dynamics of each boring bar, so that the optimal adjustment of the control parameters (gains, filters, etc.) is performed that minimise the dynamic flexibility of the boring bar (100) to be damped.

The dynamics of the boring bar (100) is defined from the length and diameter parameters. The modular nature of the active damper (1) as per the invention means that it can be adapted to the dynamics of different bars, automatically establishing the optimal control parameters for each case.

According to one calibration mode, the active damper (1) dampens the vibrations according to a pre-established configuration in the control means (9).

According to another calibration mode, the active damper (1) actively dampens the vibrations by additionally adjusting the actuation parameters, such as high-pass filters, low-pass filters and gain, by means of the control means (9). For this calibration mode, the active damper (1) obtains measurements from the sensors (5 and/or 6), so that said measurements are transmitted to the control means (9), so that said adjustment means define the actuation to be automatically performed by the active damper (1), modifying the actuation parameters depending on the measures taken.

In this text, the term "comprises" and its variants (such as "comprising", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person with average skill in the art could carry out (for example, in terms of the choice of materials, dimensions, components, design, etc.), within the scope of what may be deduced from the claims.

## Claims

1. An active damper (1) for vibration attenuation in a cutting tool of a boring bar (100), wherein the damper (1) comprises:
• an actuator (101) comprising a first end (13), a second end (14) and a cavity (12), wherein the cavity (12) is between the first end (13) and the second end (14); wherein at least one of the first end (13) and the second end (14) is attachable to a boring bar (100); the damper module (101) with a fixed body (2) that defines a longitudinal direction (8) from the first end (13) to the second end (14); the actuator (101) having:
• electromagnets (4) that are fixed with respect to the body (2) of the actuator (101), wherein the electromagnets (4) are configured to generate a magnetic field in the cavity (12), and distributed in the body (2) according to different actuation directions perpendicular to the longitudinal direction (8);
• an inertial mass (3) in the cavity (12), wherein the inertial mass (3) is movable with respect to the body (2) in directions perpendicular to the longitudinal direction (8); the electromagnets (4) being around the inertial mass (3);
• an acceleration sensor (5) configured to measure accelerations of the actuator (101) attached to the fixed body (2) of the actuator (101), wherein the accelerations have directions perpendicular to the longitudinal direction (8);
• and wherein the active damper (1) comprises control means (9) for adjusting currents of the electromagnets (4) communicatively connected to the acceleration sensor (5) of the actuator (101), and the control means (9) are configured to adjust currents of the electromagnets (4) based on measurements of the accelerations of the actuator (101), the accelerations having directions perpendicular to the longitudinal direction (8).

2. The active damper (1) according to claim 1, wherein the cavity (12) has the shape of a cylinder, the directions perpendicular to the longitudinal direction (8) being radial directions of the cavity (12).

3. The active damper (1) according to any one of the preceding claims, wherein the electromagnets (4) are in the cavity (12).

4. The active damper (1) according to claims 2 and 3, wherein the electromagnets (4) are in symmetrical locations with respect to an axis of revolution of the cavity (12).

5. The active damper (1) according to any one of the preceding claims, wherein the inertial mass (3) is suspended in the cavity (12).

6. The active damper (1) according to any one of the preceding claims, wherein the inertial mass (3) is coupled to the body (2) of the actuator (101) by means of an elastic coupling.

7. The active damper (1) according to any one of the preceding claims, wherein the acceleration sensor (5) of the actuator (101) comprises a biaxial accelerometer or two uniaxial accelerometers.

8. The active damper (1) according to any one of the preceding claims, wherein the control means (9) are configured to adjust the amplitude and/or frequency of the currents of the electromagnets (4) based on the measurements of the accelerations of the body (2) of the actuator (101), the accelerations having directions perpendicular to the longitudinal direction (8).

9. The active damper (1) according to any one of the preceding claims, comprising an acceleration sensor (6) of the inertial mass (3), configured to measure accelerations of the inertial mass (3); wherein the acceleration sensor (6) of the inertial mass (3) is communicatively connected to the adjustment means (9); wherein the control means (9) are configured to adjust currents of the electromagnets (4) based on measurements of the accelerations of the body (2) of the actuator (101) and based on measurements of the accelerations of the inertial mass (3).

10. The active damper (1) according to any one of the preceding claims, wherein the acceleration sensor (6) of the inertial mass (3) comprises a biaxial accelerometer or two uniaxial accelerometers.

11. The active damper (1) according to any one of the preceding claims, wherein the first end (13) is removably attachable to a boring bar of a machine tool and the second end (14) being removably attachable to a boring bar (100) of a machine tool.

12. The active damper (1) according to any one of the preceding claims, wherein the control means (9) are configured to perform a dynamic calibration of each boring bar (100) automatically.

13. A cutting bar (100) for a machine tool, wherein the boring bar comprises the active damper (1) according to any one of the preceding claims.

14. The cutting bar of claim 13, the boring bar (100) comprising a boring head (102), wherein the inertial mass (3) is between the boring head (102) and the end of the boring bar (100).
